# EUROPÄISCHE PATENTSCHRIFT

(11) **EP 0 884 117 B1**
(45) Veröffentlichungstag und Bekanntmachung des Hinweises auf die Patenterteilung: **24.09.2003**
(21) Anmeldenummer: 98109062.4
(22) Anmeldetag: 19.05.1998
(51) Int. Cl.: B09B 1/00

(54) **Vorrichtung zur Deponieentgasung**
Device for removing gases from a landfill
Dispositif pour évacuer les gaz d'une décharge

(30) Priorität: 10.06.1997 DE 19724430
(43) Veröffentlichungstag der Anmeldung: 16.12.1998
(73) Patentinhaber: REHAU AG + Co, 95111 Rehau (DE)
(72) Erfinder: Bergmann, Jens-Uwe, 95111 Rehau (DE); Eichmann, Hans-Ludwig, 95111 Rehau (DE); Klein, Tino, 95111 Rehau (DE)

(56) Entgegenhaltungen:
- WO-A-89/07493
- DE-A- 3 131 100
- US-A- 5 577 558

## Beschreibung

Die Erfindung betrifft eine Vorrichtung zur Deponieentgasung, wobei das aus dem Deponiegut austretende Deponiegas unter der Deponieabdeckung gesammelt wird und über mit einem Filter ausgestattete Entgasungsdome in die Atmosphäre abströmt, gemäß dem Oberbegriff des Patentanspruchs 1.

Eine derartige Vorrichtung ist beispielsweise aus der US-A-5 577 558 bekannt.

Ein Entgasungsrohr für Deponien ist aus der WO-A-89/07493 zu entnahmen. Dieses Entgasungsrohr enthält eine Füllung die auf einer perforierten Platte angeordnet ist.

Ein Entgasungsdom ist aus der DE-OS 33 06 665 bekanntgeworden. Zum Aufbau dieses Entgasungsdomes wird zunächst ein Mantelrohr auf den Deponieboden gestellt und mit Filterkies gefüllt. Nachdem die Deponie bis in etwa der Höhe des Mantelrohres mit Deponiegut befüllt worden ist, wird das Mantelrohr um etwa eine Länge nach oben gezogen und neu mit Filterkies befüllt. Bei diesem bekannten Dom muß also in zeitlichen Abständen jeweils das Mantelrohr um eine Länge nach oben gezogen und neu mit Kies verfüllt werden. Die Herstellung dieser Entgasungsdome ist also sehr zeitaufwendig und nur durch Einsatz von Maschinen wie Kranwagen durchführbar. Wegen des sehr geringen Hohlraumvolumens der aufgeschütteten Filterkiessäule ist zur Gewährleistung einer ausreichenden Entgasung eine große Querschnittsfläche des Domes erforderlich. Bei Ablagerung von unterschiedlich verrottbarem Deponiegut, welches sich dann unterschiedlich setzt, werden im Verrottungszeitraum im Deponiegut Querkräfte bewirkt, die eine Verschiebung des aus lose aufgeschüttetem Filterkies bestehenden Domes bewirken können. Durch die Verlagerung von Filterkiesschichten kann aber eine sichere Entlüftung nicht mehr erfolgen oder die Querschnittsfläche des Filterkieses muß so groß gewählt werden, daß auch bei Verlagerung von Filterkiesschichten eine Entgasung gewährleistet bleibt. Auf diese Weise wird allerdings wertvoller Platz für das Deponiegut verbraucht.

Mit den bekannten Entgasungsdomen kann zwar eine Deponie insoweit entgast werden, als das im Deponiegut anfallende Deponiegas über die Kiesfilter aus der Deponie in die Umgebungsatmosphäre abgegeben wird. Da durch diese Filtervorrichtung keine Geruchsstoffe aus dem Deponiegas entfernt werden, bleibt bei der Verwendung solcher Vorrichtungen der Nachteil der Geruchsbelästigung der Deponieumgebung erhalten.

Zur Mülldeponieentgasung sind ferner sogenannte Brunnenköpfe bekannt - DE 37 05 902 A1. Diese Brunnenköpfe sind konstruktiv aufwendige Vorrichtungen, die der Sammlung von Deponiegas dienen, welches über sogenannte Sondenrohre aus der Deponie in die Brunnenköpfe geführt wird. Das gesammelte Deponiegas wird aus den Brunnenköpfen einer Verwertungsanlage zugeführt. Diese Brunnenköpfe haben also keinerlei Filterwirkung, sondern leiten das ungefilterte Deponiegas der Verwertungsstelle, z. B. einem Kraftwerk, zu. Neben der aufwendigen Konstruktion dieser Brunnenköpfe wird es als äußerst nachteilig angesehen, daß Absperrungen und Wasservorlagen mit Anschlußstutzen für die Wasserrückführung erforderlich sind, was den Aufwand und die Kosten für eine derartige Vorrichtung erheblich erhöht.

Bei Methangehalten größer 15 % wird entweder eine Deponiegasnutzung /-verwertung in Blockheizkraftwerken angestrebt, bzw. das Deponiegas wird über sogenannte Hochtemperaturfackeln entsorgt bzw. unschädlich gemacht.

Bei abgedichteten Deponieflächen mit Methangaskonzentrationen kleiner 15 % erfolgt eine Entgasung über sogenannte Entgasungsfenster, die in die Oberfläche eingelassen werden. Diese bestehen im wesentlichen aus Betonschachtringen, die durch die Dichtungsschicht durchgestanzt oder direkt auf die Entgasungsdrainage eingebaut sind. Anschließend werden diese Schächte mit humosem Material verfüllt, welches beim Durchströmen des Gases für eine Umsetzung der Geruchs- und Schadstoffe sorgen soll.

Derartige Entgasungsvorrichtungen sind unhandlich durch das große Gewicht der Betonschachtringe und durch die kleine Aufstandfläche dieser Betonschachtringe kann es zu unerwünschten Setzungen und aufgrund des schlecht verdichteten Untergrundes sogar zu Schrägstellungen des Schachtes kommen. Dadurch können Undichtigkeiten entstehen und die Standsicherheit des Schachtes ist gefährdet. Weiterhin ist Beton im wesentlichen gegen Deponiegas als nicht beständig zu erachten, so daß die Lebensdauer solcher Bauwerke im allgemeinen auf wenige Jahre begrenzt ist. Als besonderer Nachteil ist jedoch zu werten, daß es keine gasdichte Anbindung an die Deponieabdeckung, die in der Regel eine Kunststoffdichtungsbahn ist, gibt.

Auch kann es durch Austrocknung und biologische Umsetzung des Biofiltermaterials zum Schrumpf der Materialschüttung kommen. Dadurch entstehen im inneren Randbereich Ablösungserscheinungen, was zu unerwünschter Randgängigkeit des Deponiegases, d. h. zu einer Kurzschlußströmung führt. In diesem Fall bleibt die Filterschüttung völlig wirkungslos.

Aus der DE 31 31 100 A1 ist es weiter bekannt, daß zur Deponieentgasung in die Bohrungen der Deponie, die ein perforiertes Futterrohr aufweisen können, ein durch eine Kiesschicht gestütztes Sammelrohr einzubringen ist, wobei die gesamte Sondenanordnung erforderlichenfalls aus der Bohrung herausgezogen werden kann. Die dazu erforderlichen Bohrungen werden in den Müllschüttungen bis zum gewachsenen Boden der Deponie eingebracht und sind jeweils durch Rigolen-Kreuzungspunkte in den Rigolen-Netzen geführt. Diese Bohrungen sind mit aus dem Brunnenbau bekannten Filterrohren mit Schlitz- oder Schlitzbrückenlochung ausgefüttert, so daß sie einerseits die Bohrungswandung stabilisieren, andererseits aber den Übertritt von den aus den Rigolen zuströmenden Zersetzungsgasen in die Bohrungen ermöglichen. Das Herausheben der Sondenanordnung aus der zugehörigen Bohrung, beispielsweise zur Neubefüllung oder Reinigung, ist jedoch äußerst aufwendig und kaum durchzuführen, ohne die Bohrung zu zerstören.

Die Erfindung hat es sich zur Aufgabe gestellt, eine Vorrichtung anzugeben, mit der auf Dauer Geruchsstoffe aus Deponiegasen ausgefiltert werden, so daß ein geruchsloser Gasstrom an die Umgebungsatmosphäre abgegeben werden kann.

Diese Aufgabe wird erfindungsgemäß durch die Vorritchung nach Patentanspruch 1 gelöst.

Zweckmäßige Weiterbildungen der Erfindung sind Gegenstand der abhängigen Ansprüche.

Hierbei hat es sich als vorteilhaft erwiesen, daß der patronenförmige Behälter auf dem Rand eines in das Lumen des Schutzrohres an dessen unteren freien Ende umlaufend hineinragenden Stützflansches aufsteht. Der patronenförmige Behälter ist ferner an seinem auf dem Stützflansch aufstehenden freien Ende gegen den Stützflansch abgedichtet. Dieser Stützflansch setzt sich nach außen über den Umfang des Schutzrohres in Form einer umlaufenden Flanschrippe fort. Diese Flanschrippe dient als Fußbereich des Schutzrohres und verhindert ein Einsinken der erfindungsgemäßen Vorrichtung in dem Deponiekörper.

In einer zweckmäßigen Weiterbildung durchsetzt ein im Abstand vom äußeren Umfang des Schutzrohres gehaltenes Gaspegelrohr die umlaufende Manschette und die Flanschrippe und bildet mit seiner direkten Verbindung zum Gassammelraum unter der Deponieabdeckung eine Kontrollanzeige für die Wirksamkeit des Bio-Filters.

Im patronenförmigen Behälter für das Bio-Material sind zweckmäßigerweise Handgriffe oder sonstige Eingriffsöffnungen für Hantierungsarbeiten eingelassen.

Das Schutzrohr und der patronenförmige Behälter sind aus polymerem Werkstoff, vorzugsweise aus HD-Polyethylen.

Dieser Werkstoff hat gegenüber dem bisher verwendeten. Werkstoff Beton ein wesentlich geringeres Gewicht, welches durch eine wesentlich größere Aufstandsfläche verteilt wird. Diese größere Aufstandsfläche wird erreicht durch den in das Lumen des Schutzrohres an dessen unterem freien Ende umlaufend hineinragenden Stützflansch, welcher sich nach außen über den Umfang des Schutzrohres in Form einer umlaufenden Flanschrippe fortsetzt. Damit sind Setzungen und Schrägstellungen und daraus resultierende Undichtigkeiten der erfindungsgemäßen Vorrichtung ausgeschlossen.

Durch eine spezielle Zusammensetzung des für die Füllung des patronenförmigen Behälters verwendeten Biomaterials wird die Gefahr der Eigenverdichtung dieses Füllmaterials deutlich verringert und somit die mögliche Standzeit der Filterpatronen erhöht. Diese Biofilterschüttung kann in Abhängigkeit von der Deponiegaszusammensetzung bestehen aus:
a) einer Mischung aus organischem Material und anorganischem Material
b) biologisch inertem Material.

Der Biofilterschüttung können im Bedarfsfall definierte Mengen bestimmter Mikroorganismenkulturen zugesetzt werden, die ein spezielles Abbauvermögen gegenüber den Geruchsverbindungen des zu behandelnden Deponiegases haben.

Der Biofilterschüttung können weiter zusätzlich definierte Mengen von Materialien, z. B. spezielle Aktivkohle, zugesetzt werden, die ein spezielles Sorptionsvermögen gegenüber den Geruchsverbindungen des zu behandelnden Deponiegases haben.

Durch das spezielle Gaspegelrohr kann die Funktionalität des Filters regelmäßig überprüft werden, der Austausch der Schüttung im patronenförmigen Behälter kann somit bei Bedarf erfolgen. Dieser Austausch der Biofilterschüttung ist durch einfachen Austausch der Biofilterpatrone problemlos möglich. Bei entsprechender Dimensionierung der Patrone ist der Austausch mit zwei Personen ohne teure Hebezeuge zu bewerkstelligen. Eingearbeitete Handgriffe und entsprechende Einstecklöcher für einfache Rundeisen zur besseren Handhabung gewährleisten dabei einen problemlosen Austausch. Die Patrone kann durch Ausschütten des alten und Einfüllen des neuen Biofiltermaterials direkt vor Ort neu befüllt und wiederverwendet werden. Alternativ ist auch ein Wechsel der Patronen und anschließend zentraler Austausch des Schüttmaterials möglich.

Durch im Inneren des patronenförmigen Behälters gasdicht angebrachte Einlassungen wie Rippen und dergleichen werden innere Randläufigkeiten von Deponiegas und damit Kurzschlußströmungen vermieden. Durch diese Zwangsführung des Gases und das dadurch optimierte Anströmverhalten wird die Abbauleistung der im Biofiltermaterial vorhandenen Mikroorganismen optimal ausgenutzt.

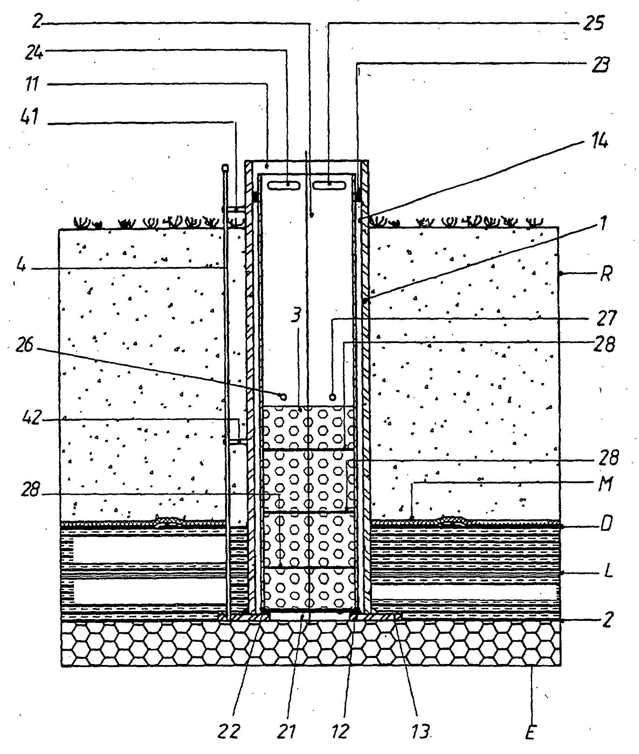

In der Zeichnung ist der Querschnitt einer Vorrichtung zur Deponieentgasung nach der Erfindung schematisch dargestellt.

Der Schichtenaufbau des Deponiequerschnitts erfolgt von unten nach oben mit einer Entgasungsschicht E, auf der eine ein- oder mehrlagige Lehmabdichtung L angeordnet ist, auf der wiederum eine dicke Schicht Rekultivierungsboden R aufgebracht ist. Die Deponieabdichtung besteht aus der Lehmabdichtung L und ggf. einer über der Lehmschicht im Preßverbund verlegten Kunststoffdichtungsbahn D, die mit einer am äußeren Umfang des Schutzrohres 1 umlaufenden gas- und flüssigkeitsdicht verbundenen Manschette M aus Polyethylen gas- und flüssigkeitsdicht verbunden ist.

Das Schutzrohr 1 besitzt an seinem unteren Ende ein in sein Lumen 11 umlaufend hineinragenden Stützflansch 12, der sich nach außen über den Umfang des Schutzrohres 1 in Form der umlaufenden Flanschrippe 13 fortsetzt.

Im Inneren des Schutzrohres 1 ist der patronenförmige Behälter 2 angeordnet, in dessen Lumen das Biofiltermaterial 3 angedeutet ist. Der patronenförmige Behälter 2 steht auf dem in das Lumen 11 des Schutzrohres 1 an dessen unterem freien Ende umlaufend hineinragenden Stützflansch 12 auf. Der patronenförmige Behälter 2 ist am unteren Ende durch eine Lochplatte 21 abgedeckt, so daß das Deponiegas aus der Entgasungsschicht über das Biofiltermaterial in das Lumen des patronenförmigen Behälters 2 aufsteigen kann. Die Lochplatte 21 ist im Bereich der Aufständerung auf dem Stützflansch 12 durch eine umlaufende Dichtung 22 gegen den ungefilterten Durchtritt von Deponiegas in das Lumen 11 des Schutzrohres 1 abgesichert.

Dieser Absicherung dient zusätzlich eine umlaufende Dichtung 23 am oberen Ende des Schutzrohres 1, welche den Zwischenraum 14 zwischen dem Innenumfang des Schutzrohres 1 und dem Außenumfang des patronenförmigen Behälters 2 gegen den Durchtritt von Deponiegas abdichtet.

In den patronenförmigen Behälter 2 sind im oberen Randbereich Eingriffsöffnungen 24, 25 eingelassen, über die der patronenförmige Behälter 2 aus dem Lumen 11 des Schutzrohres 1 mitsamt der Biofilterschicht 3 herausgezogen werden kann.

Dieses Handling wird unterstützt durch Einstecklöcher 26, 27 im mittleren Bereich des patronenförmigen Behälters 2, durch die Rundeisen oder ähnliche Betätigungsmittel beim Ein- und Ausführen des patronenförmigen Behälters 2 in oder aus dem Schutzrohr 1 eingesetzt werden können.

Im Inneren des Behälters 2 sind ferner umlaufende Einlassungen wie Rippen 28 und dergleichen angeordnet, die gas- und flüssigkeitsdicht mit den zugeordneten Umfangsflächen des Behälters 2 verbunden sind. Diese Rippen 28 bewirken eine Zwangsführung des abgeleiteten Deponiegases und verhindern eine schädliche Randläufigkeit von Deponiegas.

Seitlich an das Schutzrohr 1 ist das Gaspegelrohr 4 angeschlossen. Dieser Anschluß erfolgt über die Abstandhalter 41, 42, über die die Entfernung des Gaspegelrohres 4 vom Umfang des Schutzrohrs 1 festgelegt ist. Im unteren Bereich durchdringt das Gaspegelrohr 4 die umlaufende Manschette M und die nach außen abstehende Flanschrippe 13 des Schutzrohres 1 und steht somit in direkter Wirkverbindung mit der Entgasungsschicht unter der erfindungsgemäßen Vorrichtung zur Deponieentgasung. Auf diese Weise kann die Wirksamkeit des Biofiltermaterials 3 im patronenförmigen Behälter ständig überprüft werden. Sobald die Biofilterwirkung nachläßt, kann dann der Filter in der oben beschriebenen Weise ausgewechselt bzw. erneuert werden.

## Patentansprüche

1. Vorrichtung zur Deponieentgasung, wobei das aus dem Deponiegut austretende Deponiegas unter der Deponieabdeckung gesammelt wird und über mit einem Filter ausgestattete Entgasungsdome in die Atmosphäre abströmt, wobei der Entgasungsdom ein Schutzrohr (1) ist, in dessen Lumen (11) im Abstand vom Innenumfang des Schutzrohres (1) ein patronenförmiger Behälter (2) für Biofiltermaterial (3) eingesetzt ist, wobei der patronenförmige Behälter (2) zum Deponiegut hin mit einer Lochplatte (21) versehen ist und wobei der Zwischenraum (14) zwischen dem Innenumfang des Schutzrohres (1) und dem Außenumfang des patronenförmigen Behälters (2) gegen Durchtritt von Deponiegas abgedichtet ist,
**dadurch gekennzeichnet,**
**dass** das Schutzrohr (1) aus polymerem Werkstoff ist und dass der Außenumfang des Schutzohres (1) über eine umlaufende Manschette (M) aus Polyethylen mit der Deponieabdeckung (D) gas- und flüssigkeitsdicht verbunden ist.

2. Vorrichtung nach Anspruch 1, **dadurch gekennzeichnet, dass** der patronenförmige Behälter (2) auf dem Rand eines in das Lumen (11) des Schutzrohres (1) an dessen unterem freien Ende umlaufend hineinragenden Stützflansches (12) aufsteht.

3. Vorrichtung nach Anspruch 2, **dadurch gekennzeichnet, dass** der patronenförmige Behälter (2) an seinem auf dem Stützflansch (12) aufstehenden freien Ende gegen den Stützflansch (12) abgedichtet ist.

4. Vorrichtung nach den Ansprüchen 1 und 2, **dadurch gekennzeichnet, dass** sich der Stützflansch (12) nach außen über den Umfang des Schutzrohres (1) in Form einer umlaufenden Flanschrippe (13) fortsetzt.

5. Vorrichtung nach den Ansprüchen 1 bis 4, **dadurch gekennzeichnet, dass** ein im Abstand (41, 42) vom äußeren Umfang des Schutzrohres (1) gehaltenesGaspegelrohr (4) die Manschette (M) und die umlaufende Flanschrippe (13) durchsetzt und mit seiner direkten Verbindung zur Entgasungsschicht (E) unter der Deponieabdeckung (D) eine Kontrollanzeige für die Wirksamkeit des Biofiltermaterials (3) bildet.

6. Vorrichtung nach den Anspruch 1, **dadurch gekennzeichnet, dass** im patronenförmigen Behälter (2) Handgriffe (24, 25) und sonstige Eingriffsöffnungen (26, 27) für Hantierungsarbeiten eingelassen sind.

7. Vorrichtung nach Anspruch 1, **dadurch gekennzeichnet, dass** die umlaufende Manschette (M) über den gesamten Umfang des Schutzrohres (1) gas- und flüssigkeitsdicht mit diesem verbunden ist.

8. Vorrichtung nach Anspruch 1, **dadurch gekennzeichnet, dass** im Inneren des patronenförmigen Behälters (2) umlaufende Einlassungen wie Rippen (28) angeordnet sind, welche gas- und flüssigkeitsdicht mit den zugeordneten inneren Umfangsflächen des patronenförmigen Behälters (2) verbunden sind.

## Claims

1. Device for landfill site venting, in which the gas escaping from the landfill waste is collected under the landfill covering and is discharged to the atmosphere through a venting dome equipped with a filter, in which the venting dome is a conduit (1) in the lumen (11) of which a cartridge-type container (2) for biological filter material (3) is inserted at a distance from the inside periphery of the conduit (1), in which the cartridge-type container (2) is equipped with a perforated plate (21) facing the landfill waste and in which the interstice (14) between the inside periphery of the conduit (1) and the outside periphery of the cartridge-type container (2) is sealed to prevent the passage of the gas,
**characterised by**:
the conduit (1) is made of a polymer material and the outside periphery of the conduit (1) is connected by an encircling sleeve (M) made of polyethylene to the landfill covering (D) forming a seal against gas and liquids.

2. Device according to Claim 1, **characterised by**: The lower open end of the cartridge-type container (2) is supported on the edge of an encircling, inward-projecting supporting flange (12) in the lumen (11) of the conduit (1).

3. Device according to Claim 2, **characterised by**: The cartridge-type container (2) supported on its open end on the supporting flange (12) is sealed against the supporting flange (12).

4. Device according to Claims 1 and 2, **characterised by**: the supporting flange (12) is extended outwards beyond the periphery of the conduit (1) in the form of an encircling flange rib (13).

5. Device according to Claims 1 and 4, **characterised by**: A gas level indicator (4) held at a distance (41, 42) from the outside periphery of the conduit (1) penetrates the sleeve (M) and the encircling flange rib (13) and forms an indicator of the effectiveness of the biological filter material (3) due to its direct connection to the vented layer (E) beneath the landfill covering (D).

6. Device according to Claim 1, **characterised by**: Handles (24, 25) and other access openings (26, 27) are made in the cartridge-type container (2) for handling.

7. Device according to Claim 1, **characterised by**: The encircling sleeve (M) is connected over the entire periphery of the conduit (1) to form a gas and liquid seal.

8. Device according to Claim 1, **characterised by**: Encircling recesses such as ribs (28) and similar fittings are located inside the container (2), which are connected to the opposing inner peripheral surfaces of the cartridge-type container (2) to form a gas and liquid seal.

## Revendications

1. Dispositif de dégazage de décharges dans lequel le gaz de décharge s'échappant des déchets est collecté sous la couverture de la décharge et rejeté dans l'atmosphère par un dôme de dégazage équipé d'un filtre, le dôme de dégazage étant un tube de protection (1), dans l'ouverture (11) duquel un réservoir (2) en forme de cartouche destiné à contenir une matière filtrante biologique (3) est monté à distance du périmètre du tube de protection (1), le réservoir en forme de cartouche (2) comportant une plaque perforée (21) vers les déchets (21) et l'espace intermédiaire (14) entre le périmètre intérieur du tube de protection (1 ) et le périmètre extérieur du réservoir en forme de cartouche (2) étant rendu étanche contre le passage de gaz de décharge,
**caractérisé en ce que**
le tube de protection (1) est en matériau polymère et **en ce que** le périmètre extérieur du tube de protection (1) est raccordé par une manchette périphérique (M) en polyéthylène avec la couverture de la décharge (D) de manière étanche aux gaz et aux liquides.

2. Dispositif selon la revendication 1, **caractérisé en ce que** le réservoir en forme de cartouche (2) repose sur le rebord d'une bride d'appui (12) pénétrant dans l'ouverture (11) du tube de protection (1) à son extrémité inférieure.

3. Dispositif selon la revendication 2, **caractérisé en ce que** le réservoir en forme de cartouche (2) est étanche contre la bride d'appui (12) à son extrémité libre reposant sur la bride d'appui (12).

4. Dispositif selon les revendications 1 et 2 **caractérisé en ce que** la bride d'appui (12) se prolonge vers l'extérieur au-delà de la périphérie du tube de protection (1) sous forme d'une nervure de bride (13).

5. Dispositif selon les revendications 1 et 4, **caractérisé en ce qu'**un tube de niveau de gaz (4) maintenu à une distance (41, 42) du périmètre extérieur du tube de protection (1) traverse la manchette (M) et la nervure de bride périphérique (13) et forme avec son raccordement direct avec la couche de dégazage (E) sous la couverture de la décharge (D) un indicateur de contrôle de l'efficacité de la matière filtrante biologique (3).

6. Dispositif selon la revendication 1, **caractérisé en ce que** des poignées (24, 25) et autres ouvertures de préhension (26, 27) sont aménagées dans le réservoir en forme de cartouche (2) pour des travaux de manipulation.

7. Dispositif selon la revendication 1, **caractérisé en ce que** la manchette périphérique (M) est raccordée sur toute la périphérie du tube de protection (1) de manière étanche aux gaz et aux liquides.

8. Dispositif selon la revendication 1, **caractérisé en ce que** des emboîtements tels que des nervures (28) sont disposés à l'intérieur du réservoir (2) et sont raccordés de manière étanche aux gaz et aux liquides avec les surfaces périphériques intérieures correspondantes du réservoir en forme de cartouche (2).
